(19) Europäisches Patentamt
European Patent Office
Office européen des brevets

(11) **EP 1 345 099 B1**

(12) **EUROPÄISCHE PATENTSCHRIFT**

(45) Veröffentlichungstag und Bekanntmachung des Hinweises auf die Patenterteilung:
**02.11.2011 Patentblatt 2011/44**

(21) Anmeldenummer: **02017503.0**

(22) Anmeldetag: **06.08.2002**

(51) Int Cl.:
*B25J 9/16* (2006.01)   *G05B 19/401* (2006.01)

(54) **Verfahren zur Bestimmung der Lage eines Objektes und eines Werkstücks im Raum zur automatischen Montage des Werkstücks am Objekt**

Method for determining the spatial position of an object and a workpiece for automatically mounting the workpiece on the object

Procédé de détermination de la position spatiale d'un object et d'une pièce pour monter automatiquement la pièce sur l'objet

(84) Benannte Vertragsstaaten:
**AT BE BG CH CY CZ DE DK EE ES FI FR GB GR IE IT LI LU MC NL PT SE SK TR**

(30) Priorität: **04.03.2002   DE 10209220**
**12.07.2002   DE 10231530**

(43) Veröffentlichungstag der Anmeldung:
**17.09.2003   Patentblatt 2003/38**

(73) Patentinhaber: **VMT Vision Machine Technic Bildverarbeitungssysteme GmbH**
**68219 Mannheim (DE)**

(72) Erfinder:
• **Schnell, Michael, Prof.**
**64625 Bensheim (DE)**
• **Neddermeyer, Werner, Prof. Dr.**
**64367 Mühltal (DE)**
• **Mikeska, Harald Manfred Günter**
**68219 Mannheim (DE)**
• **Grünewald, Frank, Dr.-Ing.**
**69488 Birkenau (DE)**

(74) Vertreter: **Mierswa, Klaus**
**MIERSWA &VONNEMANN**
**Patentanwälte**
**Postfach 10 25 52**
**68025 Mannheim (DE)**

(56) Entgegenhaltungen:
EP-A- 0 884 141      DE-A1- 10 002 230
DE-A1- 19 930 087    US-A- 4 402 053
US-A- 5 168 453      US-A- 5 380 978
US-A- 6 163 946

**Beschreibung**

Technisches Gebiet:

Die Erfindung betrifft ein Verfahren zur Bestimmung der Lage eines Objektes und eines Werkstücks im Raum zur automatischen Montage bzw. Einfügen des Werkstücks am Objekt mittels eines Roboters mit Greifer und unter Verwendung eines digitalen Bildverarbeitungssystems mit wenigstens einer Kamera und einem Rechner gemäß dem Oberbegriff des Anspruchs 1.

Stand der Technik:

Die schnelle und berührungslose 3D-Vermessung eines dreidimensionalen Körpers besitzt eine Schlüsselfunktion auf dem Weg zur höheren Automatisierung und zur vollständigen Qualitätsüberwachung in vielen Fertigungsprozessen, wobei die SD-Positionserfassung die genaue Kenntnis der Position von Objekten im Raum und deren Lage relativ zueinander liefert. Besonders in der industriellen Produktion kommt der schnellen und berührungslosen 3D-Positions- und 3D-Formerfassung eine große Bedeutung zu, so z. B. für die Maßhaltigkeitskontrolle, die Vollständigkeitsprüfung, Robotervision in der automatischen Montage, Prüfung von Oberflächenstrukturen, Überwachung von Sicherheitszonen, 3D-Objekterkennung und Navigation im Raum, das Abdichten von Fugen oder Nähten, das Sealing, oder das Einsetzen von Scheiben oder anderen Bauteilen an Karossen oder Werkstücken durch Industrieroboter. Die 3D-Formerfassung liefert die absoluten Geometriemaße von Objekten, die unabhängig vom Oberflächenzustand, von der Entfernung, Drehung und Beleuchtung sind, d. h. sie sind rotations-, verschiebungs- und beleuchtungsinvariant.

Hierzu ist die digitale Bildverarbeitung Voraussetzung und heute Stand der Technik, wobei kalibrierte Kameras, was Grundvoraussetzung ist, das zu bearbeitende Objekt zu erfassen. Methoden und Verfahren der Mustererkennung, der klassischen Bildverarbeitung und der Photogrammetrie werden mit dem Ziel eingesetzt, die Positionen bestimmter Objekte und deren Lage zueinander zu erfassen. Aus den sich ergebenden Pixeldaten bestimmter Objektmerkmale wird hiernach die 3-D-Werkstückpose in einem definierten Koordinatensystem berechnet.

Durch die DE 100 16 963 A1 ist ein Verfahren zur Bestimmung der Position eines Werkstücks und der Position von Merkmalen des Werkstücks im 3D-Raum unter Verwendung von mindestens zwei elektronischen Kameras und digitaler Bildverarbeitung bekannt geworden, wobei die Kameras auf ein gemeinsames Weltkoordinatensystem kalibriert werden und anschließend das Werkstück in den Raum zwischen den Kameras verbracht wird. Zur Erstellung des gemeinsames Weltkoordinatensystems werden die Kameras einzeln als Lochkameramodelle behandelt, und es erfolgt eine direkte Vermessung der Position und der Orientierung der Lichteintrittsöffnung einer jeden Kamera, indem die Position und die Orientierung der Lichteintrittsöffnung einer jeden Kamera in ihrem passiven Zustand mit einem separaten Meßsystem vermessen wird, welches zur direkten Antastung der Lichteintrittsöffnung imstande ist und welches die Position und die Orientierung der Lichteintrittsöffnung im Weltkoordinatensystem liefert und das in den Raum zwischen den Kameras verbrachte Werkstück durch die nunmehr aktiven Kameras optisch abgebildet und die Videobilder mit einem Rechner zum Auffinden von Merkmalen des Werkstücks ausgewertet werden. Aus der Kenntnis der Position der Kameras bezüglich des Weltkoordinatensystems, der Videobilder und der Koordinaten der Merkmale des Werkstücks in einem Koordinatensystem des Werkstücks durch einen Rechner nach der Methode des Bündelausgleichs die Position des Werkstücks in Weltkoordinaten sowie die Position der Merkmale des Werkstücks in Weltkoordinaten errechnet werden.

Der Einsatz von Robotern ist in der Regel daran gebunden, daß die Position des zu handhabenden Objektes in engen Grenzen definiert ist. In vielen Produktionsprozessen kann dies entweder nicht sichergestellt werden oder muß durch eine aufwendige, teure und gleichzeitig inflexible Positioniereinheit erreicht werden. Letzteres steht dem Wunsch nach flexiblen Produktionsstraßen entgegen. So werden z. B. Automobilkarossen in bestimmten Abschnitten der Produktion hängend an einem Transportsystem bewegt, das eine Karosse lediglich mit einer Genauigkeit von +/- 30 mm positionieren kann. Eine Bearbeitung durch einen Roboter wird damit unmöglich, wenn für den Arbeitsvorgang selbst eine höhere Genauigkeit gefordert wird.

Wenn ein Werkstück zu einem Objekt hinzugefügt oder in das Objekt eingebaut werden soll, so kommt es zu sogenannten Fügefehlern, weil sowohl das Objekt als auch das zu fügende Werkstück ungenau positioniert sind. Aufgrund dieser ungenauen Positionierung der Werkstückes und des Objektes, in welches das Werkstück mittels eines Roboters eingefügt werden soll, sowie der Toleranz des Roboters kommt es zu erheblichen Fügefehlern, die sich aus der Summe dieser Einzelfehler berechnen. Denn die Position des Roboters bzw. des Roboterarmes kann entweder über die Zeit oder durch Versehen verändert worden sein oder das Werkstück wird nicht in genau der gleichen Position vom Roboterarm zum Verbau aufgenommen.

Bisherige Lösungen gehen des Weiteren von der vereinfachenden Annahme aus, daß das Werkstück positionsgenau von Roboter gegriffen wird und vom Greifort bis zur Verbauposition außerdem keine weiteren Fehler mehr auftreten, wie sie zum Beispiel durch Sauggreifer, Roboterfehler und Objekttoleranzen bedingt sind. Es wird dann lediglich die Raumlage des Objektes, in welches das Werkstück einzufügen ist, bestimmt. In der Praxis ist dies jedoch nicht erreichbar, zudem das Objekt neben Positionsfehlern selbst in sich Fehler birgt, zum Beispiel Rohbautoleranzen, was eben zu den genannten Fügefehlern führt.

Durch die EP-A-0 884 141 ist ein kraftgesteuertes Robotersystem zur Durchführung eines Arbeitsschrittes Einbauen eines ersten Werkstücks in ein zweites Werkstück bekannt geworden, umfassend: einen Roboter mit einer Roboterhand zum Halten des ersten Werkstücks und einen Kraftsensor zum Erfassen der auf das erste Werkstück einwirkenden Kraft, das von der Roboterhand gehalten wird; einen Optiksensor zur Gewinnung von Bildwerten, welche die relative Position bzw. Orientierung zwischen dem ersten Werkstück und dem zweiten Werkstück liefern; eine Steuervorrichtung zum Steuern des Roboters und des Optiksensors, wobei die Steuervorrichtung eine Vorrichtung umfasst, die den Einbauschritt durchführt und die das erste von der Roboterhand gehaltene Werkstück an das zweite Werkstück annähert, und die einen Einbauschritt unter der Kraftsteuerung auf der Basis eines Ausgangs des Kraftsensors durchführt. Eine Korrekturvorrichtung dient zur Gewinnung der Positions- bzw. Orientierungswerte des Werkstücks, die die relative Position bzw. Orientierung zwischen dem ersten Werkstück und dem zweiten Werkstück auf der Basis der Bildwerte veranschaulichen, die durch den Optiksensor erhalten werden, und zum Korrigieren der Position und der Orientierung des Roboters auf der Basis der erhaltenen Positions- bzw. Orientierungswerte des Werkstücks vor dem Einbauschritt. Die Korrekturvorrichtung erhält die Positions- bzw. Orientierungswerte des Werkstücks auf der Basis der Bildwerte des ersten Werkstücks und der Bildwerte des zweiten Werkstücks, die vom Optiksensor gewonnen werden. Eine Unterscheidungsvorrichtung dient zur Gewinnung von Einbauzustandswerten, die den Einbauzustand des ersten Werkstücks in dem zweiten Werkstück auf der Basis der Bildwerte der ersten und zweiten Werkstücke veranschaulichen, und die durch den Optiksensor erhalten werden, zur Unterscheidung, ob der Einbauzustand auf der Basis der erhaltenen Einbauzustandswerte nach dem Beendigen des Einbauschritts normal ist oder nicht. Die Korrekturvorrichtung korrigiert die Position und die Orientierung des Roboters auf der Basis des Vergleichs zwischen den erhaltenen Positions- bzw. Orientierungswerten des Werkstücks und den Positions- bzw. Orientierungswerten des Werkstücks, die vor der Steuervorrichtung eingegeben werden. Die Korrekturvorrichtung gewinnt Positions- bzw. Orientierungswerte des Werkstücks auf der Basis von mindestens einem der Bildwerte des ersten Werkstücks und der Bildwerte des zweiten Werkstücks, die in einer Haltezustand-Erfassungsposition erhalten werden, welche in der Nähe einer Position eingestellt ist, in der der Einbauschritt beginnt, und die die Position und die Orientierung des Roboters an der Einbauschritt-Startposition korrigiert.

Es handelt sich somit um einen kraftgestützen Einbauvorgang, der sowohl eine gute Werkstückhaltung mit sensorischer Kraftüberwachung, als auch eine sehr gute Annäherungsposition verlangt, weshalb die Relativposition und die Orientierung der beiden Werkstücke aufgenommen werden, um die Roboterposition in der Annäherungsposition zu korrigieren, um den kraftgesteuerten Einbau starten zu können.

Als weiterer Stand der Technik hierzu ist noch R. Gerdes, R. Otterbach, R. Kammüller: Kalibrierung eines digitalen Bildverarbeitungssystems mit CCD-Kamera- Teil I und Teil II, in: tm Technisches Messen 60, 1993, 6, S. 255-261 (Teil I) und 60, 1993, 7/8, S. 283-288 (Teil II) zu nennen.

Technische Aufgabe:

Der Erfindung liegt die Aufgabe zugrunde, ein Verfahren zur Bestimmung der Lage eines Objektes und eines Werkstücks im Raum zur automatischen Montage des Werkstücks am Objekt zu schaffen, mittels welchem ein ungenau positioniertes Werkstück mit einem Roboter gegriffen und positionsgenau in ein ebenfalls ungenau positioniertes Objekt eingefügt werden soll.

Offenbarung der Erfindung sowie deren Vorteile:

Diese Aufgabe wird durch ein Verfahren zur Bestimmung der Lage eines Objektes und eines Werkstücks im Raum zur automatischen Montage des Werkstücks am Objekt mittels eines Roboters mit Greifer und unter Verwendung eines digitalen Bildverarbeitungssystems mit wenigstens zwei Sensoren, wie optische Sensoren, insbesondere Kameras, wie CCD-Kameras, und einem Rechner gelöst,

bei welchem der Roboter mit Greifer und die Sensoren des Bildverarbeitungssystems in ihrer Lage im Weltkoordinatensystem W vermessen und diese Koordinaten dem Bildverarbeitungssystem eingegeben und gespeichert werden,

die Lage eines ersten Objektes, Kalibrierobjekt, wird in einer Soll-Montageposition des Objektes ebenfalls im Weltkoordinatensystem W vermessen und die Koordinaten der Soll-Montageposition ebenfalls im Bildverarbeitungssystem gespeichert,

ein erstes Werkstück, Kalibrierwerkstück, wird mittels des Greifers des Roboters in eine Soll-Vorhalteposition gefahren, welche einen kleinen Abstand von der Soll-Montageposition zum Kalibrierobjekt besitzt und ebenfalls im Weltkoordinatensystem W vermessen und die Koordinaten der Soll-Vorhalteposition im Bildverarbeitungssystem gespeichert,

die Sensoren sind dergestalt im Weltkoordinatensystem W angeordnet und in dieser Position im Weltkoordinatensystem eingemessen, dass sie gleichzeitig sowohl die Soll-Montageposition des Kalibrierobjektes als auch die Soll-Vorhalteposition des Kalibrierwerkstücks erfassen, so dass das Bildverarbeitungssystem die Abweichung zwischen der Soll-Vorhalteposition und der Soll-Montageposition berechnen kann,

anschließend wird ein nachfolgendes Objekt "ungenau" in eine Ist-Montage- bzw. Fügeposition des Objektes verbracht, welche von der Soll-Montageposition des Kalibrierobjektes abweichen kann,

der Greifer des Roboters entnimmt aus einem Lager ein nachfolgendes Werkstück "ungenau" auf und verfährt es in eine Ist-Vorhalteposition, welche von der Soll-Vorhalteposition des Kalibrierwerkstücks abweichen kann, wobei die Sensoren das Werkstück in der Ist-Vorhalteposition und gleichzeitig das Objekt in der Ist-Montageposition erfassen,

nunmehr bestimmt das Bildverarbeitungssystem - in einem oder mehreren Bildern der Sensoren - die angefahrene Ist-Position des Werkstücks sowie die angefahrene Ist-Position des Objektes, und errechnet die notwendige Relativbewegung zwischen Werkstück und Objekt sechs-dimensional und gibt dem Greifer des Roboters diese Koordinaten der Ist-Montageposition vor, um welche der Greifer des Roboters zur genauen Plazierung des Werkstücks am Objekt translatorisch und rotatorisch zu verfahren ist.

In einer weiteren Ausgestaltung des Verfahrens hält der Roboter das Werkstück in der Ist-Vorhalteposition zur Durchführung des Vermessungsvorgangs kurz an. In einer weiteren Ausgestaltung des Verfahren wird dasselbe mit einem einzigen Sensor, wie CCD-Kamera, durchgeführt, welcher hinsichtlich der Kalibrierung und Verfahrbarkeit mehrfach positionierbar ist, so dass auch nur mit einem einzigen Sensor, zum Beispiel CCD-Kamera, verfahrensgemäß gearbeitet werden kann.

In einer weiteren Ausgestaltung des Verfahrens sind die Sensoren, wie CCD-Kameras, am Roboter selbst verteilt angeordnet. Oder die Sensoren, wie CCD-Kameras sind zum Teil am Roboter selbst und zum Teil ortsfest verteilt angeordnet.

In weiterer Ausgestaltung des Verfahrens werden am Objekt und/oder am Werkstück innerhalb der Ist-Montage oder Fügeposition bzw. der Ist-Vorhalteposition signifikante Merkmale, wie Konturen, Ecken, Aussparungen oder Bohrungen, angetastet. Dadurch ist eine genaue Erfassung von Objekten möglich, welche, wie Scheiben, transparent sind. In weiterer Ausgestaltung des Verfahren werden die signifikanten Merkmale durch Beleuchtung kenntlich gemacht. Dabei kann als Beleuchtung Infrarotlicht oder Laserlicht oder Streifenlicht zur Anwendung gelangen. In weiterer Ausgestaltung des Verfahren werden Laserlichtlinien verwendet.

Der hervorstechende Vorteil des erfindungsgemäßen Verfahrens besteht darin, dass die Greifposition des Roboters vermessen wird und in die Auswertung eingeht. Das ist ein großer Vorteil, da nicht immer davon ausgegangen werden kann, dass einerseits das Werkstück innerhalb kleiner, vorgegebener Grenzen reproduzierbar aufgenommen worden ist, andererseits auch nicht davon ausgegangen werden darf, dass sich das Objekt, in oder an welches das Werkstück zu montieren ist, sich innerhalb kleiner, vorgegebener Grenzen reproduzierbar befindet. In vorteilhafter Weise werden somit durch das Verfahren in automatischer Montage ein ungenau positioniertes Werkstück mit einem Roboter, welcher ebenfalls Verfahrfehler aufweisen kann, gegriffen und positionsgenau in ein ebenfalls ungenau positioniertes Objekt ohne Verfügefehler eingefügt.

Durch die Erfindung werden deshalb vorteilhaft die folgenden Fehler kompensiert:

- Fehler beim Greifen des Werkstückes
- Fehler in der Positionierung des Objektes
- Fehler in den Toleranzen des Werkstückes und des Objektes
- Roboterfehler, sie spielen praktisch keine Rolle mehr, weil vom Roboter nur noch ein sehr kurzer Weg gefahren werden muss, nämlich der für jeden einzelnen Fügevorgang berechnete Weg, welchen der Roboter zurücklegen muss, um das Werkstück exakt im oder am Objekt zu fügen.

Die Steuerung des Roboters gibt die Position bzw. die Koordinaten des Roboters an das Bildverarbeitungssystem weiter zur Berechnung der durch den Roboter anzufahrenden Positionen; ebenso sind die Sensoren, wie Digitalkameras, im Weltkoordinatensystem vermessen bzw. kalibriert.

Beispiele der Erfindung sind an Hand einer Zeichnung beschrieben, in der zeigen:

Figur 1 eine perspektivische schematische Darstellung eines Roboters mit Greifer, welcher eine Scheibe zum Einbau in eine Karosse hält und

Figur 2 eine schematische Zeichnung der durchzuführenden Vermessungsschritte der am Verfahren beteiligten Komponenten.

# EP 1 345 099 B1

Bevorzugte Ausführungsform der Erfindung:

Das nachfolgend beschriebene Beispiel ist der automatisierten Fahrzeugmontage entnommen. Karossen 1 werden nacheinander auf einer Transportschiene 2 in eine Montage- oder Fügeposition verfahren, wo mittels eines Roboters 7 mit einem Greifer 7' eine vom Greifer 7' getragene Scheibe 6 in eine Karossenaussparung 5 der jeweiligen Karosse 1 eingesetzt wird. Der Roboter 7 ist auf einer Fahrschiene 8 verfahrbar angeordnet und kann zwischen einem Magazin 9, aus welchem die Scheiben 6 nacheinander entnommen werden, und der Karosse 1 hin- und herfahren bzw. schwenken oder beides.

Zur Aufnahme der Scheiben 6 besitzt der Roboter 7 an seinem Greifer 7' eine Greifplatte 10, an welcher Saugnäpfe 11 zum Ergreifen und Loslassen der Scheiben 6 angeordnet sind. Nachdem der Roboter 7 aus dem Magazin 9 mittels der Greifplatte 10 eine Scheibe 6 aufgenommen hat, fährt er die Scheibe 6 in eine Vorhalteposition 4 der Scheibe 6 kurz vor der Karosse 1.

Hier nun erblicken, beispielsweise, drei optische Sensoren, wie Digitalkameras 3, 3', 3", welche Teil eines Bildverarbeitungssystems mit einem nicht gezeigten Rechner sind, aus drei verschiedenen Richtungen drei verschiedene Vorhaltebereiche 12, 13, 14, gegeben durch die Vorhalteposition 4, wobei die Sensoren, wie Digitalkameras 3, 3', 3" gleichzeitig sowohl einen - relativ kleinen - Bereich der Füge- bzw. Einbauposition der Karossenaussparung 5 der Karosse 1 als auch einen - ebenfalls relativ kleinen - Bereich der Vorhalteposton 4 der Scheibe 6 erfassen. Montage- oder Fügungsort und Werkstück werden somit gleichzeitig von den Sensoren, zum Beispiel Digitalkameras 3, 3', 3", erfasst.

Die optischen Sensoren 3, 3', 3", zum Beispiel Digitalkameras 3, 3', 3", sind entweder ortsfest und kalibriert oder sie sind auf dem Roboter montiert und kalibriert, wobei es auch möglich ist, nur einen oder zwei Sensoren, wie Digitalkameras 3, 3', 3", auf dem Roboter 7, die dritte ortsfest kalibriert, zu montieren. Der Roboter 7 kann die Scheibe 6 in der Vorhalteposition 4 kurzzeitig anhalten, so dass die Sensoren 3, 3', 3", zum Beispiel Digitalkameras 3, 3', 3", eindeutig die Koordinaten der Scheibe 6 und der Karossenaussparung 5 ermitteln können.

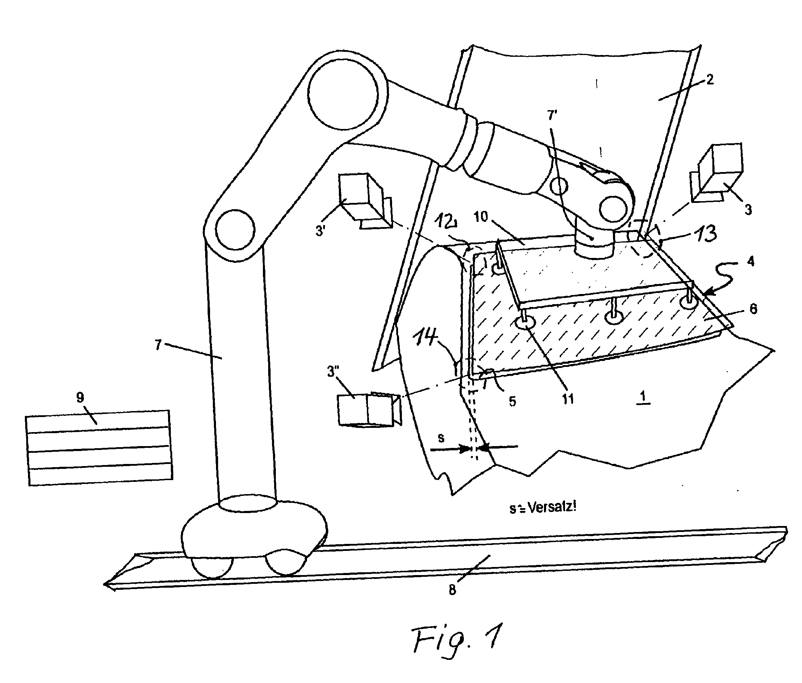

Nunmehr berechnet das Bildverarbeitungssystem anhand der von den drei Digitalkameras 3, 3', 3" ermittelten Koordinaten sowie den vorher ermittelten Soll-Koordinaten der sogenannten Kalibrierkarosse und des sogenannten Kalibrierwerkstücks den Ist-Vektor, um welchen der Greifer 7' bzw. der Roboter 7 in den drei Raumkoordinaten zu verfahren ist, um den Ist-Vektor zu fahren. In der Figur 1 ist zur Veranschaulichung hierzu zweidimensional ein Versatz "s" zwischen Scheibe 6 und Karossenaussparung 5 eingezeichnet. Der Versatz "s" ist in Realität sechs-dimensional, nämlich drei Positionen und drei Orientierungen.

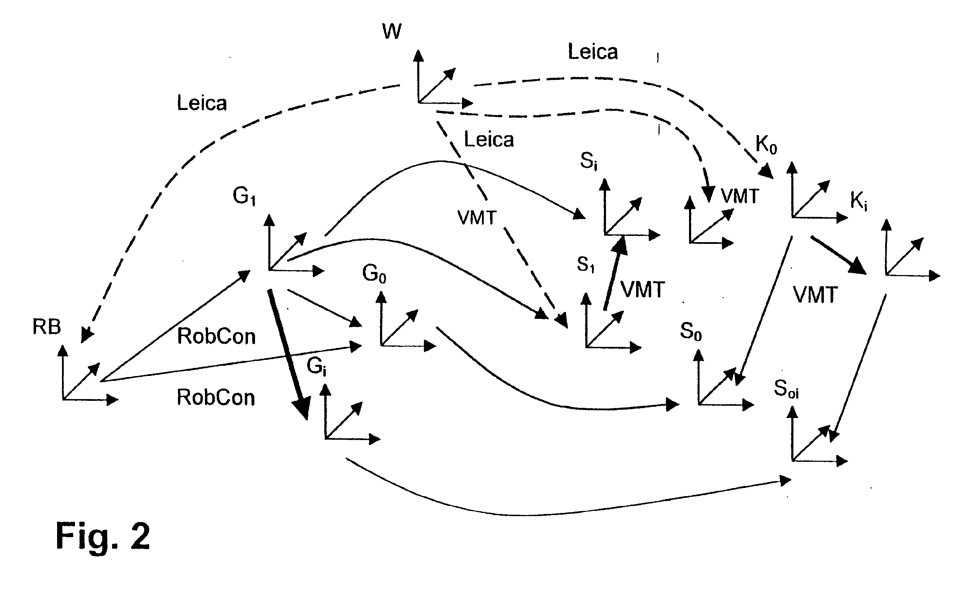

Figur 2 zeigt in schematischer Wiedergabe eine Zeichnung, welche die durchzuführenden Vermessungsschritte der am Verfahren beteiligten Komponenten wiedergibt. Diese Abbildung zeigt einen Transformationsgraphen, welcher die Beziehungen zwischen den einzelnen Koordinatensystemen der Anwendung beschreibt. Die Koordinatensysteme sind jeweils mit den einzelnen Komponenten, Objekte, der Anwendung verbunden.

In Figur 2 bedeutet die Abkürzung "VMT" Bildverarbeitungssystem mit den Komponenten optische Sensoren in Form von Digitalkameras 3, 3', 3" sowie Rechner, welcher nicht gezeigt ist. Die Bezeichnung "RobCon" bedeutet Roboter-Controller, also die Robotersteuerung, was heißt, dass die benötigten Daten von der jeweiligen Robotersteuerung zur Verfügung gestellt werden.

Des Weiteren gelten in Figur 2 die folgenden Benennungen:

| | |
|---|---|
| W | Weltkoordinatensystem, Bezugskoordinatensystem für die gesamte Roboterzelle bzw. Applikation |
| RB | Roboter-Basiskoordinatensystem, Roboter 7 |
| VMT | Bezugssystem Bildverarbeitungssystem |
| K (allg) | Karossenkoordinatensystem |
| $K_0$ | Karossenreferenzposition (Objekt-Kalibrierposition) |
| $K_i$ | Position der aktuellen i-ten Karosse |
| G (allg) | Robotergreiferkoordinatensystem |
| $G_0$ | Greifer-Einbauposition an Referenzkarosse für Referenzscheibe (Position des Greifers 7' des Roboters 7 in Soll-Vorhalteposition des Werkstücks 6) |
| $G_1$ | Greifer in Vorhalteposition, konstant für alle Scheiben, relativ zu RB |
| $G_i$ | Greifer in Einbauposition an der aktuellen i-ten Karosse für die aktuelle i-te Scheibe |
| S (allg) | Scheibenkoordninatensystem |
| $S_0$ | Referenzscheibe in Einbauposition an Referenzkarosse (Werkstück-Kalibrierposition) |
| $S_{0i}$ | Aktuelle i-t Scheibe in Einbauposition an aktueller i-ter Karosse |
| $S_1$ | Referenzscheibe in Vorhalteposition, relativ zu $G_1$ |

5

$S_i$        Aktuelle i-te Scheibe in Vorhaltepostion, relativ zu $G_1$

RobCon     Roboter-Controller

Ein Bildverarbeitungssystem als Sensorsystem, welches entweder auf einem Greifer 7' eines Roboters 7 oder stationär, nämlich außerhalb des Roboters 7, installiert ist, berechnet die Raumlage des Werkstücks 6 und die Raumlage des Objektes 1, in welches das Werkstück 6 gefügt werden soll. Aus diesen beiden Werten wird dann der Ist-Vektor für den Roboter 7 berechnet. Der Ist-Vektor gibt an, welchen Weg der Roboterarm 7 zurücklegen muss, um das Werkstück 6 exakt im Objekt 1 zu fügen; dabei werden auch Ungenauigkeiten des zu fügenden Werkstücks 6, wie auch des Objektes 1 größtenteils durch die dem Verfahren innewohnende Mathematik kompensiert.

Zunächst wird dem Roboter manuell über seinen Roboter-Controller gelehrt, das Werkstück 6 in die richtige Position, die sogenannte Soll-Einbauposition, an der ersten Karosse, dem Kalibrierobjekt, zu bringen. Diese Position der Karosserie in der Soll-Montageposition oder ersten Phase wird hier $K_0$ als Karosserie-Referenzposition bezeichnet. Dem Roboter werden die benötigten Daten von der Robotersteuerung, Roboter-Controller, zur Verfügung gestellt.

Mit Hilfe eines Bildverarbeitungssystems, dem wenigstens zwei, vorzugsweise drei kalibrierte Sensoren, zum Beispiel kalibrierte optische Sensoren, wie Digitalkameras 3, 3', 3", sowie ein nicht gezeigter Rechner angehören, werden danach alle Abweichungen der aktuellen Position der aktuellen Karosse 1 mit diesem Referenzrahmen bzw. Kalibrierobjekt $K_0$ verglichen, wobei die aktuelle Position der aktuellen Karosse 1 mit $K_i$ bezeichnet ist.

Der Roboter 7 nimmt dann das erste Werkstück, Kalibrierwerkstück, mit Hilfe des Greifers 7' auf. Der erste Schritt ist nun, den Roboter mit Hilfe seines Roboter-Controllers in eine Position zu kommandieren, in der das Bildverarbeitungssystem, nämlich die drei Kameras 3, 3', 3", gleichzeitig die Referenzpunkte bzw. Referenzbereiche 12, 13, 14 sowohl des Werkstücks als auch der Karosse sehen kann. Dieses Bild des Roboterarms 7' in dieser Position wird hier mit Vorhalteposition $G_1$ bezeichnet; die entsprechende Scheibenposition der Scheibe sei $S_1$. Diese Position ist die Referenzposition, bzw. Soll-Vorhalteposition für die Scheibe.

In einem weiteren Schritt wird nun manuell die Scheibe in die richtige Position an der Karosserie gebracht; diese Einbauposition sei $G_0$ für den Roboterarm und $S_0$ für die entsprechende Position der Scheibe; dabei verfährt der Roboter einen Soll-Vektor.

Nunmehr wird in einem weiteren Schritt der Roboterarm 7' bzw. der Roboter 7 für jede der weiteren aufgenommenen Scheiben 6 in eine Position gebracht, die der von $G_1$ in etwa entspricht, da diese Position mit Fehlern behaftet sein kann. Das eigentliche Bild dieser Position wird deshalb etwas vom Referenzbild der Scheibe, $S_1$, abweichen. Mit Hilfe des Bildverarbeitungssystems "VMT" werden diese Abweichungen vom Referenzbild zum aktuellen Bild gemessen und in Koordinaten ausgegeben.

In einem weiteren Schritt werden nun die Transformationen von $G_1$ zu $G_i$ der Steuerung des Roboterarms 7' zugeführt. $G_i$ bezeichnet hier die Einbauposition in die aktuelle Karosse 1 für die aktuelle Scheibe 6.

Um diese Transformationen durchführen zu können, benötigt man zwei Abweichungen: die der aktuellen Position der Karosse und die der Scheibe wie diese mit dem Bildverarbeitungssystem "VMT" aufgenommen worden sind sowie die folgenden Grunddaten:

- Die Position und Orientierung der Karossen-Referenzposition $K_0$ relativ zum Weltkoordinatensystem
- Die Position und Orientierung der Referenzposition bzw. Soll-Vorhalteposition der Scheibe $S_1$ relativ zum Weltkoordninatensystem
- Die Position und Orientierung des Roboters relativ zum Weltkoordinatensystem.

Diese mit Grunddaten bezeichneten Transformationen werden vorteilhaft mit einem Meßsystem der Firma LEICA durchgeführt.

Des Weiteren wird benötigt:

- Die Position und Orientierung des Robotergreifers $G_0$ relativ zum Roboter.
  Diese letztgenannte Transformation - Position und Orientierung des Robotergreifers $G_0$ relativ zum Roboter - wird vom Roboter-Controller erhalten.

Das Verfahren besteht aus zwei Grundschritten oder Modi. Im ersten Modus, Kalibriermodus, werden die folgenden Schritte durchgeführt, wobei das Meßsystem der Firma LEICA nur für diesen Modus des Kalibrierens benötigt wird:

- Schritt 1: Vermessung des Roboters (Roboter-Basiskoordinatensystem) und des VMT-Systems (Koordinaten des Bezugssystems Bildverarbeitung) mittels LEICA
- Schritt 2: Bewegen einer Karosse in die Referenzposition und Vermessen mittels LEICA (Karossenkoordinatensystem)

- Schritt 3: Verfahren des Roboters mit der ersten durch den Greifer aufgenommenen Scheibe (Referenzscheibe) in die Referenzposition der Scheibe, Vermessen der Scheibenposition mittels LEICA und Ermitteln der Robotergreiferposition mittels des Roboter-Controllers
- Schritt 4: Null- bzw. Erst-Vermessung der Karosse und der Scheibe mittels des VMT Bildverarbeitungssystems (im VMT-System)
- Schritt 5: Verfahren des Roboters mit der ersten Scheibe (Referenzscheibe) in die Einbauposition der ersten Karosse und Ermitteln der Robotergreiferposition mittels des Roboter-Controllers (im Roboter-Basiskoordinatensystem)

Im zweiten Modus werden die folgenden Schritte automatisch durchlaufen:

- Schritt 1: Anhalten der Karosse in der Montageposition
- Schritt 2: Aufnehmen der Scheibe mittels des Robotergreifers und Verfahren des Roboters in die Greifer-Vorhalteposition $G_1$
- Schritt 3: Messung der Abweichung der Karosse und der Scheibe von den zugehörigen Referenzpositionen unter Benutzung des VMT Bildverarbeitungssystems
- Schritt 4: Berechnung der Transformation von $G_1$ - Greifer in Vorhalteposition - zu Gi - Greifer in Einbauposition an der aktuellen i-ten Karosse für die aktuelle i-te Scheibe - und Übermitteln des Ergebnisses an den Roboter bzw. den Roboter-Controller
- Schritt 5: durch den Roboter-Controller nunmehr Verfahren des Roboters entsprechend der so berechneten Transformation, so dass sich die aktuelle Scheibe $S_{0i}$, das ist die aktuelle i-te Scheibe, in Einbauposition an der aktuellen Karosse, das ist die i-te Karosse, befindet.

Im Nachfolgenden sei des Weiteren eine mathematische Herleitung des erfindungsgemäßen Verfahrens wiedergegeben:

Schritt 1: es ist die Position aufzufinden, in welche die Scheibe relativ zur kalibrierten Position $S_0$ der Scheibe, das ist die Soll-Vorhalteposition, zu verfahren ist:

$$ {}^{S_0}_{i S_0} T = \left( {}^{K_0}_{S_0} T \right)^{-1} \cdot {}^{K_0}_{K_i} T \cdot {}^{K_0}_{S_0} T $$

wobei ${}^{K_0}_{S_0} T = {}^{K_i}_{i S_0} T$ gilt, weil die Scheibe für alle Karossen in der gleichen relativen Position gefügt werden muß.

Schritt 2: es ist die relative Position zwischen dem Roboter bzw. dem Greifer des Roboters und der Vorhalteposition für die erste Referenz-Scheibe aufzufinden:

$$ {}^{G_1}_{S_1} T = \left( {}^{W}_{RB} T \cdot {}^{RB}_{G_1} T \right)^{-1} \cdot {}^{W}_{S_1} T $$

wobei ${}^{G_1}_{S_1} T = {}^{G_0}_{S_0} T$ gilt, weil die relative Position zwischen der Scheibe und dem Greifer des Roboters dieselbe bzw. identisch in der Vorhalteposition $G_1$ und der Einbauposition $G_0$ ist.

Schritt 3: es ist die relative Position zwischen der Vorhalteposition der Referenz-Scheiben $S_1$ und der Enbauposition $S_0$ der Referenzscheibe an der Referenzkarosse.

$$ {}^{S_1}_{S_0} T = \left( {}^{G_1}_{S_1} T \right)^{-1} \cdot {}^{G_1}_{G_0} T \cdot {}^{G_1}_{S_1} T $$

Schritt 4: es ist die relative Position zwischen der Karosse $K_0$ und der Scheibe $S_0$ in ihrer richtigen Fügelage zu

finden, die Referenzposition:

$$
{}^{K_0}_{S_0}T = \left({}^{W}_{K_0}T\right)^{-1} \cdot {}^{W}_{RB}T \cdot {}^{RB}_{G_I}T \cdot {}^{G_I}_{G_0}T \cdot {}^{S_I}_{S_I}T
$$

Schritt 5: es ist die Transformation von Greifer in Vorhalteposition $G_1$ zu Greifer in Einbauposition $G_i$ aufzusuchen:

$$
{}^{G_I}_{G_i}T = {}^{G_I}_{S_i}T \cdot \left({}^{S_I}_{S_i}T\right)^{-1} \cdot {}^{S_I}_{S_0}T \cdot {}^{S_0}_{i\,S_{0i}}T \cdot \left({}^{G_i}_{S_i}T\right)^{-1}
$$

wobei ${}^{G_I}_{S_i}T = {}^{G_i}_{i\,S_{0i}}T$ gilt, weil die relative Position zwischen der Scheibe und dem Greifer des Roboters in jeder Greiferposition für ein und dieselbe Scheibe identisch ist.. Die vorstehende letzte Gleichung kann dann wie folgt geschrieben werden:

$$
{}^{G_I}_{G_i}T = {}^{G_I}_{G_0}T \cdot \left({}^{W}_{RB}T \cdot {}^{RB}_{G_I}T\right)^{-1} \cdot {}^{W}_{S_I}T \cdot \left(\left({}^{W}_{K_0}T\right)^{-1} \cdot {}^{W}_{RB}T \cdot {}^{RB}_{G_I}T {}^{G_I}_{G_0}T \cdot \left({}^{W}_{RB}T \cdot {}^{RB}_{G_I}T\right)^{-1} \cdot {}^{W}_{S_I}T\right)^{-1} \cdot {}^{K_0}_{K_i}T^{(VMT)} \cdot
$$

$$
\cdot \left({}^{W}_{K_0}T\right)^{-1} \cdot {}^{W}_{RB}T \cdot {}^{RB}_{G_I}T {}^{G_I}_{G_0}T \cdot \left({}^{W}_{RB}T \cdot {}^{RB}_{G_I}T\right)^{-1} \cdot {}^{W}_{S_I}T \cdot \left(\left({}^{W}_{RB}T \cdot {}^{RB}_{G_I}T\right)^{-1} \cdot {}^{W}_{S_I}T {}^{S_I}_{S_i}T^{(VMT)}\right)^{-1}
$$

wobei ${}^{K_0}_{S_0}T = {}^{K_i}_{S_{0i}}T$ gilt, weil die Scheibe in der gleichen relativen Position in die Karosse gefügt werden muß für alle Karossen.

Somit wird mit den gleichen Kameras 3, 3', 3", in einem oder mehreren Bildern die Position des Werkstücks, zum Beispiel eine Scheibe im Greifer eines Roboters, und die Position einer Karosse bestimmt, anschließend wird die Relativbewegung ausgerechnet und dem Roboter eine Fügeposition vorgegeben unter Berücksichtigung der Position der Scheibe im Greifer, Messung 1, und der Position der Karosse, Messung 2.

Anschließend wird der Roboter um den errechneten Ist-Vektor, welcher die tatsächliche Ist-Positionen von Karosse und Scheibe berücksichtigt, um die drei Raumkoordinaten verfahren.

Der Unterschied zu den bisherigen Verfahren liegt darin, das die Greifposition des Roboters mit gemessen wird und in die Auswertung eingeht. Das ist erheblich günstiger und der entscheidende Vorteil, weil nicht immer davon ausgegangen werden kann, dass weder die aktuelle Scheibe innerhalb kleiner Grenzen vom Roboter reproduzierbar aufgenommen wurde noch die aktuelle Karosse innerhalb kleiner Grenzen an den Montage- oder Fügeort verfahren worden ist.

Die Erfindung betrifft somit ein Verfahren zur Bestimmung der Lage eines Objektes 1 und Werkstücks 6 im Raum zur Montage des Werkstücks 6 am Objekt 1 mittels eines Roboters 7 mit Greifer 7' unter Verwendung eines Bildverarbeitungssystems mit Sensoren, insbesondere Kameras, wie CCD-Kameras 3,3',3" und Rechner. Roboter 7, Greifer 7' und Kameras 3,3',3" werden im Weltkoordinatensystem W vermessen und die Koordinaten im Bildverarbeitungssystem gespeichert. Die Lage eines ersten Objektes 1, Kalibrierobjekt, wird in einer Soll-Montageposition des Objektes 1 ebenfalls im Weltkoordinatensystem W vermessen und die Koordinaten im Bildverarbeitungssystem gespeichert. Ein erstes Werkstück 6, Kalibrierwerkstück, wird mittels des Greifers 7' in eine Vorhalteposition gefahren, die einen kleinen Abstand von der Soll-Montageposition zum Kalibrierobjekt besitzt und ebenfalls im Weltkoordinatensystem W vermessen und die Koordinaten gespeichert. Die Kameras 3,3',3" sind dergestalt im Weltkoordinatensystem W angeordnet und im Weltkoordinatensystem eingemessen, dass sie gleichzeitig sowohl die Soll-Montageposition des Kalibrierobjektes 1 als auch die Soll-Vorhalteposition des Kalibrierwerkstücks 6 erfassen, so dass das Bildverarbeitungssystem die Abweichung zwischen der Soll-Vorhalte- und der Soll-Montageposition berechnen kann. Nun wird ein Objekt 1 "ungenau" in eine Ist-Montageposition des Objektes 1 verbracht, die von der Soll-Montageposition des Kalibrierobjektes abweichen kann; der Greifer 7' entnimmt aus einem Lager 9 ein nachfolgendes Werkstück 6 "ungenau" auf und verfährt es in eine Ist-Vorhalteposition, welche von der Soll-Vorhalteposition des Kalibrierwerkstücks abweichen kann, wobei die Kameras 3,3',3" das Werkstück 6 in der Ist-Vorhalteposition und gleichzeitig das Objekt 1 in der Ist-Montageposition erfassen. Das Bildverarbeitungssystem bestimmt die angefahrenen Ist-Positionen des Werkstücks 6 sowie des Objektes 1 und errechnet die notwendige Relativbewegung zwischen Werkstück 6 und Objekt 1 sechs-dimensional und gibt dem Greifer 7' des Roboters 7 diese Koordinaten der Ist-Montageposition vor, um welche der Greifer 7' des Roboters 7 zur genauen Plazierung des Werkstücks 6 am Objekt 1 translatorisch und rotatorisch zu verfahren ist.

Gewerbliche Anwendbarkeit:

Der Gegenstand der Erfindung ist beispielsweise für einzufügende Werkstücke im Karosseriebau, im Türenverbau, im Schiebedachverbau, oder im Scheibenverbau u.s.w. gewerblich anwendbar. Denn das Werkstück, beispielsweise die Tür, befindet sich in der Roboterhand und muss in einen Türausschnitt, nämlich das Objekt, der Karosse montiert werden. Oder im Schiebedachverbau befindet sich das Schiebedach in der Roboterhand und muss in einen Dachausschnitt, Objekt, der Karosse montiert werden; oder im Scheibenverbau trägt die Roboterhand eine Fahrzeugscheibe, welche in einen Scheibenausschnitt einer Karosse exakt eingefügt werden muss.

Bezugszeichenliste:

| 1 | Karosse |
| 2 | Transportschiene |
| 3, 3', 3" | Digitalkameras |
| 4 | Annäherungsbereich der Scheibe an die Karosse |
| 5 | Karossenaussparung |
| 6 | Scheibe |
| 7 | Roboter |
| 7' | Roboterarm |
| 8 | Fahrschiene |
| 9 | Magazin |
| 10 | Greifscheibe |
| 11 | Saugnäpfe |
| 12, 13, 14 | Vorhaltebereiche |
| s | Versatz zwischen Scheibe 6 und Karossenaussparung 5 (nur zweidimensional dargestellt) |

**Patentansprüche**

1.  Verfahren zur Bestimmung der Lage eines Objektes (1) und eines Werkstücks (6) im Raum zur automatischen Montage bzw. Einfügen des Werkstücks (6) am Objekt (1) mittels eines Roboters (7) mit Greifer (7') und unter Verwendung eines digitalen Bildverarbeitungssystems mit wenigstens einem optischen Sensor (3,3',3"), insbesondere Kamera (3,3',3"), und einem Rechner,
    **gekennzeichnet durch** die folgenden Merkmale:

    der Roboter (7) mit Greifer (7') und die Sensoren (3,3',3") des Bildverarbeitungssystems werden in ihrer Lage im Weltkoordinatensystem (W) vermessen und diese Koordinaten dem Bildverarbeitungssystem eingegeben und gespeichert,
    die Lage eines ersten Objektes (1), Kalibrierobjekt, wird in einer Soll-Montageposition des Objektes (1) ebenfalls im Weltkoordinatensystem (W) vermessen und die Koordinaten der Soll-Montageposition ebenfalls im Bildverarbeitungssystem gespeichert,
    ein erstes Werkstück (6), Kalibrierwerkstück, wird mittels des Greifers (7') des Roboters (7) in eine Soll-Vorhalteposition gefahren, welche einen Abstand innerhalb vorgegebener Grenzen von der Soll-Montageposition zum Kalibrierobjekt besitzt und ebenfalls im Weltkoordinatensystem (W) vermessen und die Koordinaten der Soll-Vorhalteposition im Bildverarbeitungssystem gespeichert,
    die Sensoren (3,3',3") sind dergestalt im Weltkoordinatensystem (W) angeordnet und in dieser Position im Weltkoordinatensystem eingemessen, dass sie gleichzeitig sowohl die Soll-Montageposition des Kalibrierobjektes (1) als auch die Soll-Vorhalteposition des Kalibrierwerkstücks (6) vermessen, so dass das Bildverarbeitungssystem die Abweichung zwischen der Soll-Vorhalteposition und der Soll-Montageposition berechnen kann,
    anschließend wird ein nachfolgendes Objekt (1) "ungenau", nämlich nicht positionsgenau, in eine Ist-Montage- bzw. Fügeposition des Objektes (1) verbracht, welche von der Soll-Montageposition des Kalibrierobjektes abweichen kann,
    der Greifer (7') des Roboters (7) entnimmt aus einem Lager (9) ein nachfolgendes Werkstück (6) "ungenau", nämlich nicht positionsgenau, auf und verfährt es in eine Ist-Vorhalteposition, welche von der Soll-Vorhalteposition des Kalibrierwerkstücks abweichen kann, wobei die Kameras (3,3',3") das Werkstück (6) in der Ist-Vorhalteposition und gleichzeitig das Objekt (1) in der Ist-Montageposition erfassen,

nunmehr bestimmt das Bildverarbeitungssystem - in einem oder mehreren Bildern der Sensoren (3,3'3") - die angefahrene Ist-Position des Werkstücks (6) sowie die angefahrene Ist-Position des Objektes (1), errechnet die notwendige Relativbewegung zwischen Werkstück (6) und Objekt (1) sechs-dimensional und gibt dem Greifer (7') des Roboters (7) diese Koordinaten der Ist-Montageposition vor, um welche der Greifer (7') des Roboters (7) zur genauen Plazierung des Werkstücks (6) am Objekt (1) translatorisch und rotatorisch zu verfahren ist.

2. Verfahren nach Anspruch 1, **dadurch gekennzeichnet,**
**dass** der Roboter (7) das Werkstück (6) in der Ist-Vorhalteposition zur Durchführung des Vermessungsvorgangs kurzzeitig anhält, so dass die Sensoren (3, 3', 3") eindeutig die Koordinaten des Werkstücks (6) und einer Karossenaussparung (5) des Objektes (1) ermitteln können.

3. Verfahren nach Anspruch 1 oder 2, **dadurch gekennzeichnet,**
**dass** dasselbe mit einem einzigen Sensor (3,3',3") durchgeführt wird, welcher hinsichtlich der Kalibrierung und anschließenden Verfahrbarkeit mehrfach positionierbar ist

4. Verfahren nach Anspruch 1 oder 2, **dadurch gekennzeichnet,**
**dass** die Sensoren (3,3',3") am Roboter selbst verteilt angeordnet sind.

5. Verfahren nach Anspruch 1 oder 2, **dadurch gekennzeichnet,**
**dass** die Sensoren (3,3',3") am Roboter (7) selbst sowie ortsfest verteilt angeordnet sind.

6. Verfahren nach einem der vorherigen Ansprüche, **dadurch gekennzeichnet,**
**dass** an dem Objekt (1) und/oder an dem Werkstück (6) innerhalb der Ist-Montage oder Fügeposition bzw. der Ist-Vorhalteposition signifikante Merkmale, wie Konturen, Ecken, Aussparungen oder Bohrungen, angetastet werden.

7. Verfahren nach Anspruch 6, **dadurch gekennzeichnet,**
**dass** die signifikanten Merkmale durch Beleuchtung kenntlich gemacht werden.

8. Verfahren nach Anspruch 7, **dadurch gekennzeichnet,**
**dass** als Beleuchtung Infrarotlicht oder Laserlicht oder Streifenlicht zur Anwendung gelangt.

9. Verfahren nach Anspruch 8, **dadurch gekennzeichnet,**
**dass** Laserlichtlinien verwendet werden.

**Claims**

1. A method for determining the position of an object (1) and of a workpiece (6) in space in order to automatically mount the workpiece (6) onto or insert the workpiece (6) into the object (1) by means of a robot (7) with a gripper (7') and using a digital image-processing system having at least one optical sensor (3, 3', 3"), especially a camera (3, 3', 3"), and a computer,
**characterized by** the following features:

the position of the robot (7) with the gripper (7') and the sensors (3, 3', 3") of the image-processing system in the world coordinate system (W) is measured and these coordinates are entered into the image-processing system and stored, the position of a first object (1), the calibration object, is measured in a target mounting position of the object (1) likewise in the world coordinate system (W), and the coordinates of the target mounting position are likewise stored in the image-processing system,

a first workpiece (6), the calibration workpiece, is moved by means of the gripper (7') of the robot (7) into a target preparation position that is at a distance within predefined limits of the target mounting position to the calibration object, and is likewise measured in the world coordinate system (W), and the coordinates of the target preparation position are stored in the image-processing system, the sensors (3, 3', 3") are arranged in the world coordinate system (W) and measured in this position in the world coordinate system in such a manner that they simultaneously measure the target mounting position of the calibration object (1) as well as the target preparation position of the calibration workpiece (6), so that the image-processing system can compute the deviation between the target preparation position and the target mounting position,

then a subsequent object (1) is brought "imprecisely", namely, not precisely positioned, into an actual mounting or insertion position of the object (1), which can deviate from the target mounting position of the calibration object, the gripper (7') of the robot (7) removes a subsequent workpiece (6) "imprecisely", namely, not precisely positioned, from a storage facility (9), and takes it to an actual preparation position that can deviate from the target preparation position of the calibration workpiece, whereby the cameras (3, 3', 3") detect the workpiece (6) in the actual preparation position and, at the same time, detect the object (1) in the actual mounting position,

then the image-processing system - in one or more images of the sensors (3, 3', 3") - determines the reached actual position of the workpiece (6) as well as the reached actual position of the object (1), it computes the requisite relative movement between the workpiece (6) and the object (1) six-dimensionally, and it prescribes these coordinates of the actual mounting position to the gripper (7') of the robot (7), around which the gripper (7') of the robot (7) has to be moved translatorily and rotationally in order to precisely place the workpiece (6) on the object (1).

2. The method according to claim 1, **characterized in that**
the robot (7) briefly stops the workpiece (6) in the actual preparation position in order to carry out the measuring procedure, so that the sensors (3, 3', 3") can unambiguously determine the coordinates of the workpiece (6) and of a body recess (5) of the object (1).

3. The method according to claim 1 or 2, **characterized in that**
said method is carried out with one single sensor (3, 3', 3") that, in terms of the calibration and subsequent mobility, can be positioned in multiple places.

4. The method according to claim 1 or 2, **characterized in that**
the sensors (3, 3', 3") are arranged so as to be distributed on the robot itself.

5. The method according to claim 1 or 2, **characterized in that**
the sensors (3, 3', 3") are arranged so as to be distributed on the robot (7) itself as well as stationary.

6. The method according to one of the preceding claims, **characterized in that**
significant features such as contours, corners, recesses or holes on the object (1) and/or on the workpiece (6) are scanned within the actual mounting position or insertion position or within the actual preparation position.

7. The method according to claim 6, **characterized in that**
the significant features are indicated by lighting.

8. The method according to claim 7,
infrared light or laser light or grazing light is used as the lighting.

9. The method according to claim 8, **characterized in that**
the laser light lines are used.

**Revendications**

1. Procédé de détermination de la position spatiale d'un objet (1) et d'une pièce à usiner (6) pour le montage ou l'assemblage automatique de la pièce à usiner (6) sur l'objet (1) au moyen d'un robot (7) avec préhenseur (7') et ayant recours à un système de traitement numérique d'images comprenant au moins un capteur optique (3,3',3"), en particulier une caméra (3,3',3"), et un ordinateur,
**caractérisé par** les caractéristiques suivantes :

la position du robot (7) avec préhenseur (7') et des capteurs (3,3',3") du système de traitement d'images est mesurée dans le système de coordonnées mondial (W) et ces coordonnées sont entrées et mises en mémoire dans le système de traitement d'images,
la position d'un premier objet (1), ou objet de calibrage, est mesurée dans une position de consigne pour le montage de l'objet (1), également dans le système de coordonnées mondial (W), et les coordonnées de la position de consigne pour le montage sont également mémorisées dans le système de traitement d'images,

une première pièce à usiner (6), ou pièce à usiner de calibrage, est amenée au moyen du préhenseur (7') du robot (7) dans une position de consigne pour le pré-positionnement, laquelle position de consigne possède une distance, comprise dans des limites prédéfinies, de la position de consigne pour le montage par rapport à l'objet de calibrage, et est également mesurée dans le système de coordonnées mondial (W) et les coordonnées de la position de consigne pour le pré-positionnement sont mémorisées dans le système de traitement d'images, les capteurs (3,3',3") sont disposés dans le système de coordonnées mondial (W) de manière à ce qu'ils mesurent à la fois, aussi bien la position de consigne pour le montage de l'objet de calibrage (1) que la position de consigne pour le pré-positionnement de la pièce à usiner de calibrage (6), de sorte que le système de traitement d'images peut calculer l'écart entre la position de consigne pour le pré-positionnement et la position de consigne pour le montage,

ensuite, un objet suivant (1) est mis en place de façon « imprécise », à savoir non pas en position parfaite, dans une position de montage réelle ou une position d'assemblage réelle de l'objet (1), laquelle peut différer de la position de consigne pour le montage de l'objet de calibrage,

le préhenseur (7') du robot (7) prélève d'un magasin (9) une pièce à usiner suivante (6) de façon « imprécise » à savoir non pas en position parfaite et déplace ladite pièce à usiner dans une position réelle de pré-positionnement, laquelle peut différer de la position de consigne de pré-positionnement de la pièce à usiner de calibrage, les caméras (3,3',3") captant la pièce à usiner (6) dans la position réelle de pré-positionnement et en même temps l'objet (1) dans la position de consigne pour le montage,

dès lors, le système de traitement d'images détermine - en une ou en plusieurs images prises par les capteurs (3,3',3") - la position réelle dans laquelle la pièce à usiner (6) a été amenée, ainsi que la position réelle dans laquelle l'objet (1) a été amené, fait le calcul en six dimensions du mouvement relatif nécessaire entre la pièce à usiner (6) et l'objet (1), et assigne au préhenseur (7') du robot (7) ces coordonnées de la position réelle pour le montage, coordonnées déterminant les mouvements translatoires et rotatifs du préhenseur (7') du robot (7) nécessaires pour le positionnement exact de la pièce à usiner (6) sur l'objet (1).

2. Procédé selon la revendication 1, **caractérisé en ce que**
le robot (7) stoppe pour un court moment la pièce à usiner (6) dans la position réelle de pré-positionnement pour effectuer le procédé de mesure, de sorte que les capteurs (3,3',3") peuvent déterminer sans équivoque les coordonnées de la pièce à usiner (6) et d'une réserve dans la carrosserie (5) de l'objet (1).

3. Procédé selon la revendication 1 ou 2, **caractérisé en ce que**
la même chose est effectuée avec un seul capteur (3,3',3") qui peut être positionné plusieurs fois au vu du calibrage et de la déplaçabilité subséquente.

4. Procédé selon la revendication 1, ou 2, **caractérisé en ce que**
les capteurs (3,3',3") sont disposés répartis sur le robot (7) même.

5. Procédé selon la revendication 1 ou 2, **caractérisé en ce que**
les capteurs (3,3',3") sont disposés répartis sur le robot (7) même, aussi bien qu'à un endroit fixe.

6. Procédé selon l'une des revendications précédentes, **caractérisé en ce que**,
des caractéristiques significatives telles que les contours, les angles, les réserves ou les perçages peuvent être palpés sur l'objet (1) et/ou sur la pièce à usiner (6) à l'intérieur de la position réelle de montage ou de la position d'assemblage, ou de la position réelle de pré-positionnement.

7. Procédé selon la revendication 6, **caractérisé en ce que**,
les caractéristiques distinctives sont identifiables par un éclairage.

8. Procédé selon la revendication 7, **caractérisé en ce que**
l'éclairage utilisé est la lumière à infrarouge ou la lumière à laser ou la lumière structurée.

9. Procédé selon la revendication 8, **caractérisé en ce que**
l'on utilise des raies laser.

s ≙ Versatz!

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10016963 A1
- EP 0884141 A